# FASCICULE DE BREVET EUROPEEN

(11) **EP 4 306 181 B1**
(45) Date de publication et mention de la délivrance du brevet: **03.09.2025**
(21) Numéro de dépôt: 23184572.8
(22) Date de dépôt: 11.07.2023
(51) Int. Cl.: A62C 3/16, A62C 3/07

(54) **VÉHICULE À MOTEUR ÉQUIPÉ D'UN PACK BATTERIE AVEC DISPOSITIF D'EXTINCTION DE FEU**
KRAFTFAHRZEUG MIT EINEM BATTERIEPACK MIT FEUERLÖSCHVORRICHTUNG
MOTOR VEHICLE EQUIPPED WITH A BATTERY PACK WITH FIRE EXTINGUISHING DEVICE

(30) Priorité: 13.07.2022 FR 2207262
(43) Date de publication de la demande: 17.01.2024
(73) Titulaire: HUTCHINSON, 75008 Paris (FR)
(72) Inventeur: MORETTI, Nicola, 10090 Gassino Torinese (TO) (IT); BRET, Clément, 10139 Torino (TO) (IT); BAGNASCO, Maurizio, 10024 Moncalieri (IT); BOSSARD, Eric, 45210 La Selle en Hermoy (FR); LARROQUE, Christian, 45700 Pannes (FR)
(74) Mandataire: Gevers & Orès

(56) Documents cités:
- CN-A- 110 600 638
- US-A1- 2006 016 608

## Description

### Domaine technique de l'invention

La présente invention concerne le domaine de l'extinction de feu ou de la limitation d'un départ de feu dans un pack batterie. L'invention est particulièrement adaptée mais non exclusivement pour son application dans le domaine des véhicules ou engins à moteur équipés d'un ou de plusieurs packs batteries. Il peut s'agir de véhicules à motorisation électrique ou à motorisation hybride, par exemple thermique, électrique, hybride ou pile à combustible (*Fuel Cell*)*.*

### Arrière-plan technique

L'arrière-plan technique comprend notamment les documents CN-A110 600 638 et US-A1-2006/016608.

Un pack batterie désigne un ensemble de batteries ou cellules de batterie qui sont disposées les unes à côté des autres. Les cellules de batterie sont de préférence dans un contenant fermé. Elles sont reliées électriquement les unes aux autres et à des bornes électriques en vue de la recharge électrique de ces cellules et de l'alimentation électrique d'un équipement électrique tel qu'un moteur électrique.

Il est avantageux d'équiper un véhicule à moteur d'un dispositif d'extinction automatique d'un feu ou d'un départ de feu. Ce dispositif est en général autonome dans la mesure où il réagit directement à la chaleur générée par ce feu ou départ de feu.

Dans la technique actuelle, plusieurs solutions sont proposées mais ne sont pas toujours réalisables et en particulier industrialisables.

Certaines solutions consistent à utiliser un récipient de stockage de fluide extincteur, qui se présente sous la forme d'une bouteille ou bonbonne. L'inconvénient de ces solutions est lié à l'encombrement et au poids liés à l'utilisation de ce type de récipient.

D'autres solutions utilisent un simple tuyau extincteur, c'est-à-dire un tuyau qui renferme un fluide extincteur sous pression et dont les extrémités sont obturées, c'est-à-dire qu'elles ne sont pas reliées à un récipient de stockage. Autrement dit, le seul volume de fluide extincteur disponible est celui stocké dans le tuyau extincteur.

Le document WO-A1-91/08022 décrit un tuyau extincteur de ce type. Le tuyau est réalisé dans un matériau thermoplastique. En cas d'incendie, le matériau thermoplastique ramollit et la pression interne provoque la rupture du tuyau au point le plus chaud qui est généralement au droit de la source de chaleur, de façon que le fluide extincteur s'échappe du tuyau et soit directement appliqué sur la source de l'incendie.

La présente invention propose au moins un perfectionnement à la technique actuelle, qui est simple, efficace et économique.

### Résumé de l'invention

L'invention propose un véhicule à moteur comportant au moins un pack batterie, ce pack batterie comportant :
- un boîtier définissant une cavité interne ;
- des cellules de batterie électriques rechargeables agencées dans la cavité interne, et
- un dispositif d'extinction de feu qui est logé dans la cavité interne et qui est réalisé dans un matériau thermoplastique fusible, ce dispositif renfermant un fluide extincteur sous pression destiné à être libéré par fusion dudit matériau en cas de feu ou départ de feu dans la cavité interne,
caractérisé en ce que le fluide extincteur comprend un mélange de fluide et de poudre, et en ce que le boîtier comprend au moins un port d'évacuation de gaz et/ou de fumée, ledit au moins un port étant équipé d'un volet mobile entre une première position de fermeture du port et une seconde position d'ouverture du port et d'évacuation du gaz et/ou de la fumée, le volet du ou de chaque port étant configuré pour se déplacer de sa première à sa seconde position, en particulier par la pression générée, lorsque le mélange de gaz et de poudre est libéré, et ledit au moins un port comprenant une sortie orientée sur au moins un côté du véhicule.

Une des caractéristiques de l'invention concerne le mélange utilisé pour l'extinction de feu. Ce mélange comprend un fluide, tel qu'un gaz ou un liquide (par exemple un gaz sous pression sous forme liquide), et une poudre. Ce mélange est avantageux dans la mesure où le fluide et la poudre ont deux fonctions distinctes qui se combinent. La fonction de la poudre est de recouvrir les flammes et de les étouffer de manière à les priver d'oxygène. La fonction du fluide est de d'évacuer la fumée et/ou les gaz générée par le feu, le départ de feu, ou son extinction par la poudre.

Une autre caractéristique de l'invention concerne le boîtier du pack batterie qui comprend un ou plusieurs ports d'évacuation à volet ou clapet. Le gaz libéré par le dispositif peut s'échapper par ces ports pour éviter une surpression dans la cavité. En s'échappant par les ports, le gaz achemine avec lui les fumées précitées qui sont donc expulsées à l'extérieur du pack batterie. Ceci permet de rapidement évacuer les fumées et/ou les gaz générées par le feu ou le départ de feu du pack batterie. Il y a donc moins de risque que ces fumées pénètrent dans l'habitable du véhicule équipé du pack batterie et gênent ou intoxiquent ses occupants.

La sortie du ou de chaque port est orientée sur au moins un côté du véhicule, c'est-à-dire sur un côté droit, sur un côté gauche (par exemple côté conducteur) ou sur les côtés droit et gauche du véhicule.

Le pack batterie selon l'invention peut comprendre une ou plusieurs des caractéristiques suivantes, prises isolément les unes des autres ou en combinaison les unes avec les autres :
- le fluide extincteur est à l'état gazeux.
- le boîtier comprend au moins deux ports équipés chacun d'un volet mobile ;
- le boîtier a une forme générale parallélépipédique et comprend deux parois, respectivement avant et arrière, et deux parois latérales, les ports étant situés sur l'une des parois avant et arrière ;
- les ports sont à distance l'un de l'autre et situés à proximité des parois latérales ;
   -- le dispositif comprend au moins un tuyau ;
   -- le dispositif ou le tuyau a une forme allongée et peut présenter des dérivations ;
   -- le dispositif ou le tuyau est fermé à ses deux extrémités longitudinales ;
   -- le dispositif ou le tuyau a une forme générale en U, en L ou en S ;
- le dispositif se présente sous la forme d'un tuyau comprenant deux branches latérales qui s'étendent dans la cavité le long desdites parois latérales, et au moins une branche médiane ou transversale qui s'étend dans la cavité, par exemple le long de l'une des parois avant et arrière qui est opposée auxdits ports ;
- les ports comprennent ou forment chacun un coude, les coudes des ports comportant des entrées raccordées à la cavité et des sorties, les sorties des deux ports étant orientées dans des directions opposées sur deux côtés opposés du véhicule ;
- le coude est en L ou à angle droit ;
- le fluide extincteur comprend un mélange de gaz et de poudre ;
- le pack batterie comprend au moins un capteur de pression configuré pour mesurer la pression dudit fluide dans le dispositif ou le tuyau ;
- ledit au moins un capteur est relié à des moyens de communication à distance, par exemple avec des éléments du véhicule ;
- le volet du ou de chaque port est configuré pour se déplacer de sa première à sa seconde position lorsque la cavité interne atteint une pression supérieure ou égale à 1,1 bar ; plus cette valeur est faible, tout en restant supérieure à la pression atmosphérique, et plus le risque de surpression dans la cavité est faible ;
- ledit mélange comprend entre 30 et 80% en volume de poudre et le reste en fluide ;
   -- ladite poudre est du type du type ABC ;
- ladite poudre comprend du sulfate et du sel d'ammonium, voire du phosphate et des traces de bicarbonate de sodium ;
- le pack batterie est installé horizontalement sur le châssis ou est intégré au châssis du véhicule ;
- le pack batterie s'étend entre les roues et d'un côté à l'autre du véhicule
   -- ladite poudre comprend du chlorure de sodium et de potassium ;
   -- le fluide comprend un fluide unique ou un mélange de fluides ;
   -- le fluide extincteur est à l'état liquide et a une température d'ébullition supérieure ou égale à 70°C, et de préférence supérieure ou égale à 120°C,
   -- le fluide extincteur a un PRP ou PRG inférieur ou égal à 5000 ;
   -- le fluide extincteur comprend au moins un gaz HFC et/ou du C₆F₁₂O, et/ou du CO₂ ;
   -- le fluide extincteur comprend de l'azote, et de préférence majoritairement de l'azote ;
   -- ledit gaz HFC est choisi parmi le R227ea et le R125 ;
   -- le dispositif ou le tuyau comprend un matériau thermoplastique fluoré ou EVOH ;
   -- le dispositif ou le tuyau a une perméabilité audit fluide extincteur inférieure ou égale à 1 cm³.25µm/m².atm.24h ;
   -- le dispositif ou le tuyau est préformé par thermoformage pour adopter une forme correspondant à celle dans une position souhaitée d'installation dans le pack batterie ;
   -- le dispositif ou le tuyau comprend une première couche dans un matériau thermoplastique fluoré ou EVOH et une seconde couche dans un matériau thermoplastique polyamide ;
   -- le fluide extincteur peut être liquide ou gazeux à pression atmosphérique et à température ambiante ; il est avantageusement gazeux lorsqu'il est destiné à éteindre un feu ou départ de feu ; il peut donc être liquide à pression atmosphérique et à température ambiante et devenir gazeux à une température supérieure ou égale à 50°C par exemple, comme c'est le cas du C₆F₁₂O ;
   -- lesdites extrémités longitudinales sont obturées par des bouchons rapportés et fixés, par exemple par emmanchement en force ou soudage ;
   -- le dispositif ou le tuyau comprend un port d'admission et/ou d'évacuation de fluide, par exemple à une première de ses extrémités longitudinales ;
   -- le dispositif ou le tuyau comprend un port d'admission et/ou d'évacuation de fluide, par exemple à une seconde de ses extrémités longitudinales ;
   -- un port d'admission et/ou d'évacuation de fluide est situé à distance des extrémités longitudinales du dispositif ou du tuyau ;
   -- le ou chaque port du dispositif ou du tuyau comprend une valve à clapet, cette valve comportant un clapet qui est sollicité par un organe élastique dans une position de fermeture étanche du dispositif ou du tuyau, et qui est mobile depuis cette position de fermeture jusqu'à une position d'ouverture lorsqu'un fluide alimente le dispositif ou le tuyau par le port et a une pression supérieure à celle de la pression dans le dispositif ou le tuyau ;
   -- le fluide est contenu dans le tuyau à une pression comprise entre 5 et 20 bars, et de préférence entre 10 et 12 bars.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig. 1] la figure 1 est une vue schématique en perspective d'un châssis de véhicule équipé d'un pack batterie,
[Fig. 2] la figure 2 est une vue schématique en perspective d'un pack batterie,
[Fig. 3] la figure 3 est une vue schématique en perspective d'un pack batterie selon un mode de réalisation de l'invention,
[Fig. 4] la figure 4 est une vue similaire à celle de la figure 4 et illustre une étape de fonctionnement du dispositif d'extinction avec l'apparition d'un feu dans le boîtier du pack batterie,
[Fig. 5] la figure 5 est une vue similaire à celle de la figure 4 et illustre une autre étape de fonctionnement du dispositif d'extinction avec la rupture du dispositif d'extinction et la libération du mélange qu'il contient,
[Fig. 6a-6c] les figures 6a à 6c sont des vues schématiques en coupe de ports à clapet pour un pack batterie selon l'invention,
[Fig. 7] la figure 7 est une vue schématique en perspective d'un pack batterie selon une variante de réalisation de l'invention,
[Fig. 8] la figure 8 est une vue schématique en perspective d'un pack batterie selon une autre variante de réalisation de l'invention, et
[Fig. 9] la figure 9 est une vue schématique en perspective d'un pack batterie selon une autre variante de réalisation de l'invention.

### Description détaillée de l'invention

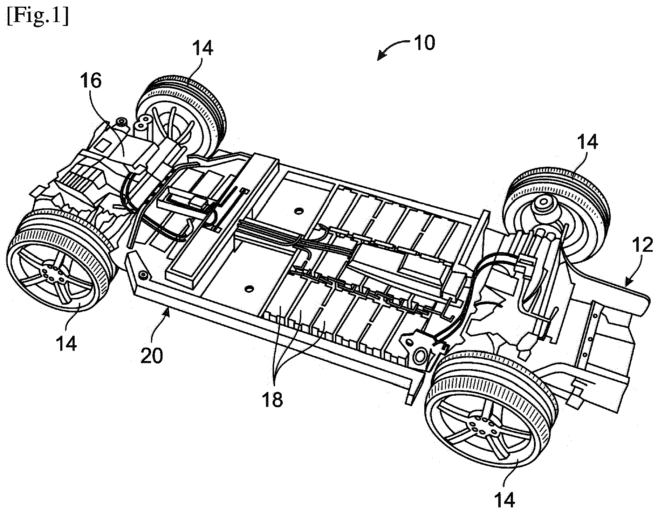

La figure 1 représente une partie d'un véhicule 10, en particulier automobile. La figure 1 montre le châssis 12 de ce véhicule 10 et ses quatre roues 14. Le véhicule 10 est équipé d'un moteur électrique 16 qui est alimenté en électricité grâce à des batteries ou des cellules de batterie 18 qui sont font partie d'un ensemble appelé « pack batterie » 20.

Le pack batterie 20 d'un véhicule 10 a en général des dimensions relativement importantes et est installé horizontalement sur le châssis 12 du véhicule 10. Comme dans l'exemple représenté, le pack batterie 20 peut s'étendre entre les roues 14 et jusqu'à proximité de celles-ci, et peut s'étendre d'un côté à l'autre du véhicule 10.

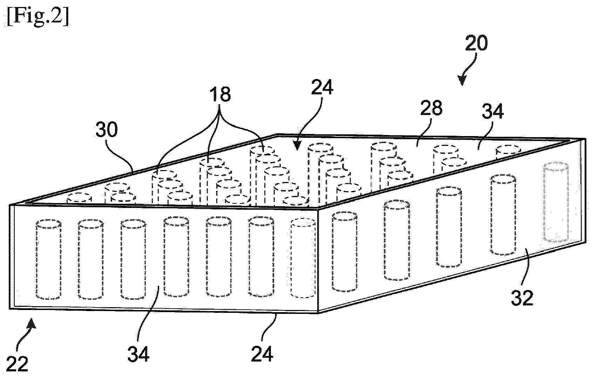

En variante, le pack batterie 20 pourrait être intégré au châssis 12 de façon à former un pack batterie du type CTC qui est l'acronyme de *Cell To Chassis.* La figure 2 représente de manière schématique un pack batterie 20 de ce type. Le pack batterie 20 comprend pour l'essentiel un boîtier 22 définissant une cavité interne 24 de logement de plusieurs cellules de batterie électriques rechargeables 18 qui sont agencées les unes à côté des autres. Dans l'exemple représenté qui n'est pas limitatif, le boîtier 22 a une forme générale parallélépipédique et comprend une paroi inférieure formant un fond 26, une paroi supérieure formant un couvercle 28, et des parois latérales 30, 32, 34. Les parois 30 et 32 sont des parois avant et arrière situées respectivement vers l'avant et vers l'arrière du véhicule 10 (cf. figure 1). Les parois 34 sont des parois latérales et donc situées sur les côtés du véhicule 10 (cf. figure 1).

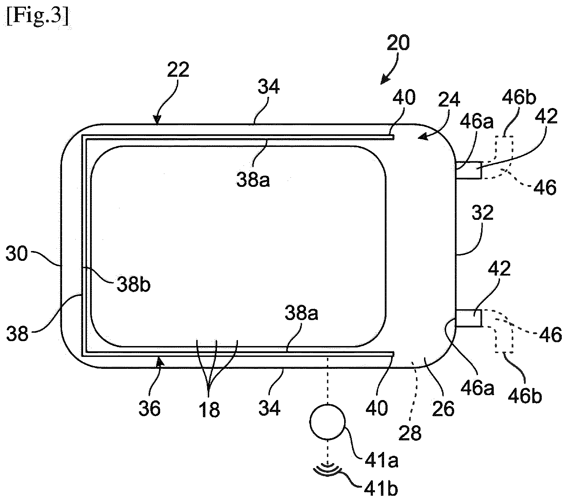

La figure 3 illustre un mode de réalisation de l'invention et montre un pack batterie 20 dont le boîtier 22 renferme dans sa cavité 24 des cellules de batterie 18 ainsi qu'un dispositif 36 d'extinction de feu.

Dans l'exemple représenté, le boîtier 22 a une forme générale parallélépipédique et comprend une paroi inférieure formant un fond 26, une paroi supérieure formant un couvercle 28, et des parois latérales 30, 32, 34. Les parois 30 et 32 sont des parois avant et arrière situées respectivement vers l'avant et vers l'arrière du véhicule 10. Les parois 34 sont des parois latérales et donc situées sur les côtés du véhicule 10.

Le fond 26 ou le couvercle 28 a par exemple une surface supérieure ou égale à 3000cm².

La cavité 24 a par exemple un volume V1 supérieur ou égal à 1L, et par exemple supérieur ou égal à 50L.

Le nombre de cellules 18 d'un pack est par exemple supérieur ou égal à 10, et par exemple supérieur ou égal à 50.

Les cellules 18 occupent un volume V2 de la cavité 14 représentant au moins 50% de V1.

Les cellules 18 peuvent avoir chacune une forme générale prismatique, cylindrique, ou de poche.

Le dispositif extincteur 36 se présente de préférence sous la forme d'un tuyau 38 renfermant un fluide extincteur sous pression. Ce tuyau 38 peut présenter des dérivations ou ramifications. En variante, le dispositif 36 pourrait se présenter sous la forme d'une poche par exemple qui serait logée dans la cavité 24 du boîtier 22, et par exemple intégrée dans une paroi du boîtier 22.

Dans l'exemple représenté, le tuyau 38 a une forme générale allongée et ses deux extrémités longitudinales 40 sont obturées, par exemple par des bouchons.

Le tuyau 38 a ici une forme générale en U et comprend deux branches latérales 38a qui s'étendent dans la cavité 24 le long des parois latérales 34 du boîtier 22, et une branche médiane 38b qui s'étend dans la cavité 24 le long de l'une des parois 30, 32, par exemple la paroi avant 30 dans l'exemple représenté.

La longueur du tuyau 38 peut être comprise entre 50cm et 5m. A titre d'exemple, le tuyau 38 a un diamètre externe compris entre 10 et 30mm, et de préférence entre 10 et 20mm. Le tuyau 38 a une épaisseur de paroi comprise entre 1 et 3mm, et de préférence entre 1 et 2mm.

Chaque bouchon peut être emmanché en force dans une des extrémités longitudinales 40 du tuyau 38. En variante, il pourrait être soudé par exemple par ultrason. Chaque bouchon peut être équipé d'un port d'admission et/ou d'évacuation de fluide, comportant de préférence une valve à clapet.

La paroi du tuyau 38 peut être du type monocouche ou multicouches. Elle peut par exemple comprendre deux couches, respectivement interne et externe.

La couche interne peut être réalisée dans un matériau à faible perméabilité par rapport au fluide extincteur, c'est-à-dire à une perméabilité inférieure ou égale à 1 cm³.25µm/m².atm.24h. Elle est par exemple réalisée en matériau thermoplastique fluoré ou EVOH.

La couche externe est réalisée dans un matériau thermoplastique polyamide, qui a elle en général une perméabilité supérieure à celle de la couche interne, et par exemple supérieure ou égale à 1 cm³.25µm/m².atm.24h.

Il est préférable que la couche à faible perméabilité soit située à l'intérieur de la couche à plus forte perméabilité. En effet, dans le cas contraire, il y aurait un risque de migration du gaz à travers la couche interne à plus forte perméabilité et de stagnation de ce gaz à l'interface entre les deux couches, susceptible d'entraîner un délaminage des couches.

Il est par ailleurs avantageux de réaliser le tuyau en deux couches plutôt qu'en une seule couche en matériau à faible perméabilité car ce matériau est relativement coûteux. Pour avoir une tenue suffisante, notamment à la pression, un tuyau monocouche devrait avoir une épaisseur importante de couche à faible perméabilité. Dans le cadre d'un tuyau bicouche ou multicouche, cette tenue est assurée par la ou les couches à plus forte perméabilité, et la couche à faible perméabilité peut avoir une épaisseur relativement faible suffisante pour assurer la fonction d'imperméabilité recherchée.

La couche à faible perméabilité pourrait être disposée entre deux couches. Cette configuration permettrait d'améliorer la tenue mécanique de la couche lors de l'étape de mise en forme du tuyau (et ainsi éviter tout risque de déchirure de cette couche), tout en garantissant une étanchéité optimale du tuyau.

Parmi les matériaux de la paroi, au moins un a une propriété fusible sous l'effet de la chaleur générée par un feu ou un départ de feu, et en particulier sous l'effet d'une température supérieure ou égale à 70°C, voire 120°C.

Dans l'exemple décrit plus haut, les deux couches ont une telle propriété fusible.

Le fluide extincteur peut être stocké dans le tuyau 38 à une pression supérieure ou égale à 10 bars, de préférence supérieure ou égale à 20 bars, et plus préférentiellement supérieure ou égale à 30 bars.

Le pack batterie 20, le dispositif 36 ou le tuyau 38 peut être équipé d'un capteur de la pression 41a du fluide extincteur. Ce capteur de pression 41a est avantageusement relié à des moyens 41b de communication à distance du type par exemple RFID ou radio. Lors d'une opération de maintenance du véhicule par exemple, un opérateur peut lire au moyen d'un équipement approprié la pression dans le tuyau 38 en passant simplement cet équipement à proximité d'une étiquette RFID ou d'un émetteur radio disposé sur le tuyau 38.

Dans une variante préférée, les moyens de communication à distance coopèrent avec des éléments du véhicule pour alerter le conducteur du véhicule en cas d'anomalie. C'est par exemple le cas lorsque la pression dans la cavité est trop faible pour que le tuyau soit opérationnel et puisse éteindre un feu ou départ de feu. Dans ce cas, le conducteur du véhicule pourrait être alerté par un voyant de son tableau de bord signifiant que le tuyau présente une anomalie et doit subir une opération de maintenance, qui consisterait à le remplacer ou à le remplir de fluide à une pression adéquate. Dans un tel cas, l'électronique du véhicule pourrait être configurée pour mettre le véhicule en arrêt ou en mode dégradé décourageant le conducteur d'utiliser son véhicule, jusqu'à ce que le tuyau subisse cette opération de maintenance.

En variante, les éléments précités du véhicule pourraient être reliés au capteur de pression 41a par une liaison filaire.

Selon une première caractéristique de l'invention, c'est un mélange qui est contenu à l'intérieur du tuyau 38 et qui est destiné à être libéré par fusion de la paroi du tuyau 38. Le mélange comprend un fluide sous pression, et en particulier un gaz sous pression, et une poudre.

Le mélange comprend de préférence entre 30 et 80% en volume de poudre, le reste du volume du mélange étant occupé par le fluide.

L'avantage de l'utilisation de ce mélange est qu'il permet de combiner les fonctions de ses deux composants, à savoir la fonction d'étouffement des flammes par la poudre et la fonction d'évacuation des fumées par le gaz sous pression.

Le fluide ou le gaz peut comprendre un fluide ou gaz unique ou un mélange de fluides ou gaz.

Le gaz a de préférence un PRP ou PRG inférieur ou égal à 5000. Le fluide peut comprendre au moins un gaz HFC et/ou du C₆F₁₂O, et/ou du CO₂. Parmi les gaz HFC utilisables, les gaz R227ea et R125 sont préférés car ils ont un PRP ou PRG de l'ordre de 3400-3500. La société DuPont commercialise par exemple des gaz de ce type sous les dénominations FE-25 et FM-200.

Le CO₂ est avantageux car il a un PRP ou PRG de 1.

Enfin, le C₆F₁₂O est également avantageux car il a un PRP ou PRG de 1. La société 3M notamment commercialise ce type de gaz sous la dénomination Novec 1230 (FK-5-1-12).

La poudre est par exemple une poudre du type ABC, c'est-à-dire une poudre apte à éteindre des feux de classes A, B et C. Ce type de poudre comprend en général du sulfate et du sel d'ammonium mais aussi du phosphate et des traces de bicarbonate de sodium. Le sel d'ammonium fond sous l'effet de la chaleur et forme une couche isolante permettant d'isoler le combustible du comburant (oxygène). La poudre peut comprendre en plus ou à la place du chlorure de sodium et de potassium.

Selon une autre caractéristique de l'invention, le boîtier 22 comprend au moins un port 42 d'évacuation de gaz et/ou de fumée, comme illustré à la figure 3.

Dans l'exemple représenté, le boîtier 22 comprend deux ports 42. Ces ports 42 sont ici situés sur l'une des parois du boîtier 22, et ici sur la paroi arrière 32. Les ports 42 sont à distance l'une de l'autre et situés à proximité des parois latérales 34.

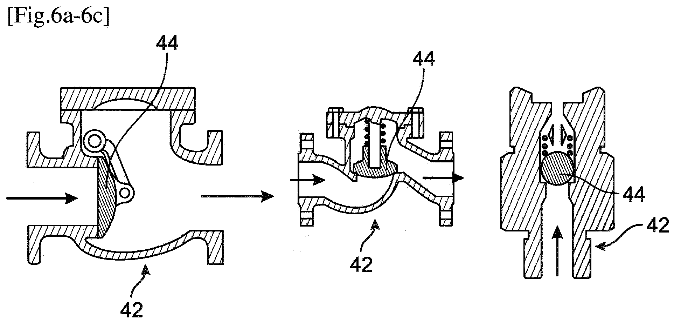

Avantageusement, chacun des ports 42 est équipé d'un volet 44 mobile entre une première position de fermeture du port et une seconde position d'ouverture du port et d'évacuation du gaz et/ou de la fumée (cf. figures 6a-6c). Le volet 44 du ou de chaque port 42 est configuré pour se déplacer de sa première à sa seconde position lorsque le mélange de gaz et de poudre est libéré.

Les figures 6a à 6c montrent plusieurs configurations possibles mais non limitatives d'un port 42 équipé d'un volet 44 mobile - ce volet 44 étant ici représenté dans sa position de fermeture. Le gaz sous pression libéré par le tuyau qui se rompt est suffisant pour provoquer le passage du volet 44 de sa première position à sa seconde position.

Le volet 44 de chaque port 42 est de préférence configuré pour se déplacer de sa première à sa seconde position lorsque la cavité 24 atteint une pression supérieure ou égale à 1,1 bar, ce qui correspond à une surpression de 0,1 bar.

Par ailleurs, chacun des ports 42 comprend ou forme un coude 46, comme schématiquement illustré en traits pointillés à la figure 3. Les coudes 46 des ports 42 comportent des entrées 46a raccordées à la cavité 24 et des sorties 46b qui sont orientées dans des directions opposées, et avantageusement sur les côtés du véhicule 10.

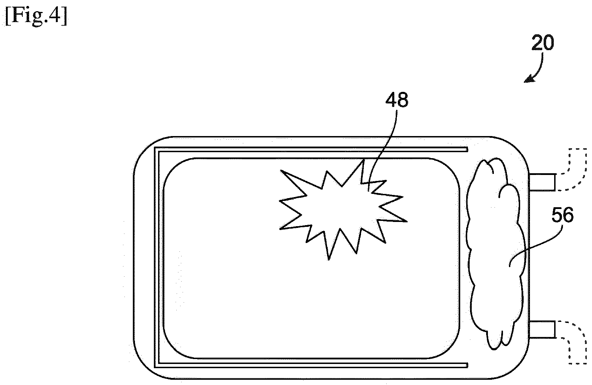

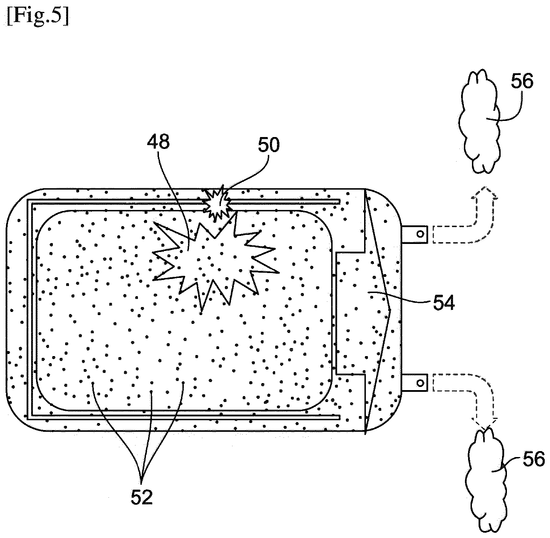

Les figures 4 et 5 montrent des étapes de fonctionnement lors de l'apparition d'un feu 48 ou d'un départ de feu dans le pack batterie 20. Le feu provoque un échauffement du tuyau 38 qui, à partir d'une certaine température, par exemple supérieure à 70 voire 120°C, fond et se rompt en 50 du fait de la pression à l'intérieur du tuyau 38. Le mélange de poudre et de fluide extincteur est alors libéré. La poudre 52 est dispersée dans la cavité 24 et recouvre le feu 48, ce qui permet de l'étouffer et de l'éteindre. Le gaz 54 est vaporisé dans la cavité 24 et s'échappe par les ports 42 en amenant avec lui les fumées et/ou les gaz 56 générées par le feu et son extinction. Les volets 44 passent alors de leurs positions de fermeture à leurs positions d'ouverture pour laisser passer le gaz sous pression et les fumées. Ces fumées 56 sont avantageusement expulsées sur les côtés du véhicule 10, comme illustré à la figure 5, ce qui évite à ces fumées de pénétrer dans l'habitacle du véhicule.

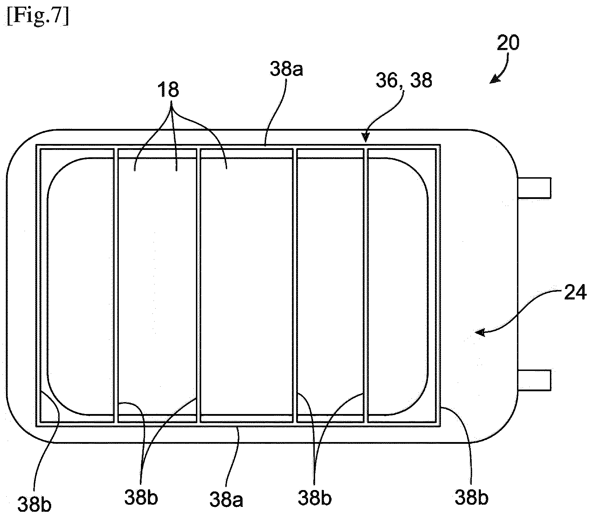

La figure 7 illustre une variante de réalisation de l'invention qui diffère du premier mode de réalisation en ce que le tuyau 38 du dispositif 36 a une forme plus complexe et présente plusieurs ramifications ou branches médianes/transversales 38b.

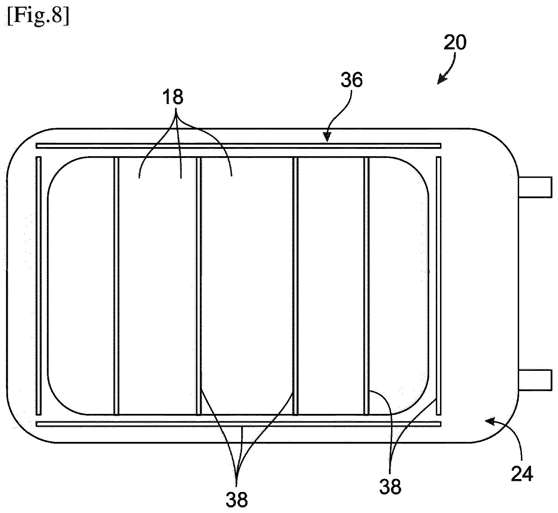

La figure 8 illustre une autre variante de réalisation de l'invention qui diffère de la précédente variante en ce que le dispositif 36 comprend plusieurs tuyaux 38 indépendants agencés à l'intérieur de la cavité 24 du pack batterie 20.

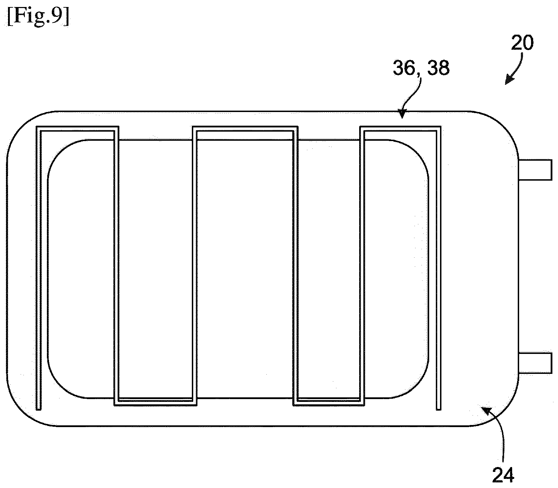

La figure 9 illustre une autre variante de réalisation de l'invention qui diffère du premier mode de réalisation en ce que le tuyau 38 du dispositif 36 a une forme générale allongée en S et serpente à l'intérieur de la cavité 24 du pack batterie 20.

## Revendications

1. Véhicule à moteur (10), comportant au moins un pack batterie (20), ce pack batterie (20) comportant :
- un boîtier (22) définissant une cavité interne (24) ;
- des cellules de batterie (18) électriques rechargeables agencées dans la cavité interne (24), et
- un dispositif (36) d'extinction de feu qui est logé dans la cavité interne (24) et qui est réalisé dans un matériau thermoplastique fusible, ce dispositif (36) renfermant un fluide extincteur sous pression destiné à être libéré par fusion dudit matériau en cas de feu ou départ de feu dans la cavité interne (24),
**caractérisé en ce que** le fluide extincteur comprend un mélange de fluide et de poudre, et **en ce que** le boîtier (22) comprend au moins un port (42) d'évacuation de gaz et/ou de fumée, ledit au moins un port (42) étant équipé d'un volet (44) mobile entre une première position de fermeture du port et une seconde position d'ouverture du port (42) et d'évacuation du gaz et/ou de la fumée, le volet (44) du ou de chaque port (42) étant configuré pour se déplacer de sa première à sa seconde position par la pression générée lorsque le mélange de gaz et de poudre est libéré, et ledit au moins un port (42) comprenant une sortie (46b) orientée sur au moins un côté du véhicule (10).

2. Véhicule à moteur (10) selon la revendication 1, dans lequel le boîtier (2) comprend au moins deux ports (42) équipés chacun d'un volet (44) mobile.

3. Véhicule à moteur (10) selon la revendication 2, dans lequel le boîtier (22) a une forme générale parallélépipédique et comprend deux parois, respectivement avant (30) et arrière (32), et deux parois latérales (34), les ports (42) étant situés sur l'une des parois avant et arrière (30, 32).

4. Véhicule à moteur (10) selon la revendication 3, dans lequel les ports (42) sont à distance l'un de l'autre et situés à proximité des parois latérales (34).

5. Véhicule à moteur (10) selon la revendication 3 ou 4, dans lequel le dispositif (38) se présente sous la forme d'un tuyau comprenant deux branches latérales (38a) qui s'étendent dans la cavité (24) le long desdites parois latérales (34), et au moins une branche médiane ou transversale (38b) qui s'étend dans la cavité (24), par exemple le long de l'une des parois avant et arrière (30, 32) qui est opposée auxdits ports (42).

6. Véhicule à moteur (10) selon l'une des revendications 2 à 5, dans lequel les ports (42) comprennent ou forment chacun un coude (46), les coudes (46) des ports (42) comportant des entrées (46a) raccordées à la cavité (24) et des sorties (46b), les sorties (46b) des deux ports (42) étant orientées dans des directions opposées sur deux côtés opposés du véhicule.

7. Véhicule à moteur (10) selon la revendication 6, dans lequel le coude (46) est en L ou à angle droit.

8. Véhicule à moteur (10) selon l'une des revendications précédentes, dans lequel le fluide extincteur comprend un mélange de gaz et de poudre.

9. Véhicule à moteur (10) selon l'une des revendications précédentes, dans lequel il comprend au moins un capteur de pression (41a) configuré pour mesurer la pression dudit fluide dans le dispositif (36).

10. Véhicule à moteur (10) selon la revendication précédente, dans lequel ledit au moins un capteur (41a) est relié à des moyens (41b) de communication à distance, par exemple avec des éléments du véhicule.

11. Véhicule à moteur (10) selon l'une des revendications précédentes, dans lequel le volet (44) du ou de chaque port (42) est configuré pour se déplacer de sa première à sa seconde position lorsque la cavité interne (24) atteint une pression supérieure ou égale à 1,1 bar.

12. Véhicule à moteur (10) selon l'une des revendications précédentes, dans lequel ledit mélange comprend entre 30 et 80% en volume de poudre et le reste en fluide.

13. Véhicule à moteur (10) selon l'une des revendications précédentes, dans lequel la poudre comprend du sulfate et du sel d'ammonium et/ou du chlorure de sodium et de potassium.

14. Véhicule à moteur (10) selon l'une des revendications précédentes, dans lequel le pack batterie (20) est installé horizontalement sur le châssis (12) ou est intégré au châssis (12) du véhicule.

15. Véhicule à moteur (10) selon l'une des revendications précédentes, dans lequel le pack batterie (20) s'étend entre les roues (14) et d'un côté à l'autre du véhicule.

## Patentansprüche

1. Kraftfahrzeug (10), das mindestens einen Batteriepack (20) umfasst, wobei der Batteriepack (20) umfasst:
- ein Gehäuse (22), das einen Innenhohlraum (24) definiert;
- wiederaufladbare elektrische Batteriezellen (18), die in dem Innenhohlraum (24) angeordnet sind, und
- eine Feuerlöschvorrichtung (36), die in dem Innenhohlraum (24) untergebracht ist und aus einem schmelzbaren thermoplastischen Material besteht, wobei diese Vorrichtung (36) ein unter Druck stehendes Löschfluid umschließt, das im Falle eines Brandes oder einer Brandausbreitung in dem Innenhohlraum (24) durch Schmelzen des Materials freigesetzt wird, **dadurch gekennzeichnet, dass** das Löschfluid ein Gemisch aus Fluid und Pulver umfasst, und dass das Gehäuse (22) mindestens eine Öffnung (42) zum Ablassen von Gas und/oder Rauchgas umfasst, wobei die mindestens eine Öffnung (42) mit einer Klappe (44) ausgestattet ist, die zwischen einer ersten Position zum Verschließen der Öffnung und einer zweiten Position zum Öffnen der Öffnung (42) und zum Ablassen des Gases und/oder des Rauchgases beweglich ist, wobei die Klappe (44) der oder jeder Öffnung (42) konfiguriert ist, um sich durch den Druck, der erzeugt wird, wenn das Gemisch aus Gas und Pulver freigesetzt wird, von ihrer ersten in ihre zweite Position zu bewegen, und wobei die mindestens eine Öffnung (42) einen Ausgang (46b) umfasst, der zu mindestens einer Seite des Fahrzeugs (10) hin ausgerichtet ist.

2. Kraftfahrzeug (10) nach Anspruch 1, wobei das Gehäuse (2) mindestens zwei Öffnungen (42) umfasst, die jeweils mit einer beweglichen Klappe (44) versehen sind.

3. Kraftfahrzeug (10) nach Anspruch 2, wobei das Gehäuse (22) eine im Allgemeinen parallelepipedische Form aufweist und zwei Wände, jeweils eine vordere (30) und eine hintere (32), sowie zwei Seitenwände (34) umfasst, wobei die Öffnungen (42) an einer der vorderen und hinteren Wand (30, 32) angeordnet sind.

4. Kraftfahrzeug (10) nach Anspruch 3, wobei die Öffnungen (42) voneinander beabstandet und in Annäherung an die Seitenwände (34) angeordnet sind.

5. Kraftfahrzeug (10) nach Anspruch 3 oder 4, wobei die Vorrichtung (38) in Form eines Schlauches vorliegt, der zwei seitliche Schenkel (38a), die sich in den Hohlraum (24) entlang der Seitenwände (34) erstrecken, und mindestens einen mittleren oder quer verlaufenden Schenkel (38b) umfasst, der sich in dem Hohlraum (24) beispielsweise entlang einer der vorderen und hinteren Wand (30, 32) erstreckt, die den Öffnungen (42) gegenüberliegt.

6. Kraftfahrzeug (10) nach einem der Ansprüche 2 bis 5, wobei die Öffnungen (42) jeweils eine Krümmung (46) umfassen oder bilden, wobei die Krümmungen (46) der Öffnungen (42) an den Hohlraum (24) angeschlossene Eingänge (46a) und Ausgänge (46b) umfassen, wobei die Ausgänge (46b) der zwei Öffnungen (42) in entgegengesetzte Richtungen an zwei gegenüberliegenden Seiten des Fahrzeugs ausgerichtet sind.

7. Kraftfahrzeug (10) nach Anspruch 6, wobei die Krümmung (46) L-förmig oder rechtwinklig ist.

8. Kraftfahrzeug (10) nach einem der vorstehenden Ansprüche, wobei das Löschfluid ein Gemisch aus Gas und Pulver umfasst.

9. Kraftfahrzeug (10) nach einem der vorstehenden Ansprüche, wobei es mindestens einen Drucksensor (41a) umfasst, der konfiguriert ist, um den Druck des Fluids in der Vorrichtung (36) zu messen.

10. Kraftfahrzeug (10) nach dem vorstehenden Anspruch, wobei der mindestens eine Sensor (41a) mit Mitteln (41b) zur Fernkommunikation, beispielsweise mit Fahrzeugelementen, verbunden ist.

11. Kraftfahrzeug (10) nach einem der vorstehenden Ansprüche, wobei die Klappe (44) der oder jeder Öffnung (42) konfiguriert ist, um sich aus ihrer ersten in ihre zweite Position zu bewegen, wenn der Innenhohlraum (24) einen Druck größer oder gleich 1,1 bar erreicht.

12. Kraftfahrzeug (10) nach einem der vorstehenden Ansprüche, wobei das Gemisch zwischen 30 und 80 Vol.-% Pulver und den Rest Fluid umfasst.

13. Kraftfahrzeug (10) nach einem der vorstehenden Ansprüche, wobei das Pulver Sulfat und Ammoniumsalz und/oder Natriumchlorid und Kaliumchlorid umfasst.

14. Kraftfahrzeug (10) nach einem der vorstehenden Ansprüche, wobei der Batteriepack (20) horizontal auf dem Rahmen (12) installiert oder in den Rahmen (12) des Fahrzeugs integriert ist.

15. Kraftfahrzeug (10) nach einem der vorstehenden Ansprüche, wobei sich der Batteriepack (20) zwischen den Rädern (14) und von einer Seite des Fahrzeugs zur anderen erstreckt.

## Claims

1. A motor vehicle (10), comprising at least one battery pack (20), this battery pack (20) comprising:
- a housing (22) defining an internal cavity (24);
- rechargeable electric battery cells (18) arranged in the internal cavity (24), and
- a fire extinguishing device (36) housed in the internal cavity (24) and made of a meltable thermoplastic material, this device (36) containing a pressurised extinguishing fluid intended to be released by melting of said material in the event of a fire or starting fire in the internal cavity (24),
**characterised in that** the extinguishing fluid comprises a mixture of fluid and powder, and **in that** the housing (22) comprises at least one port (42) for evacuating the gas and/or smoke, said at least one port (42) being equipped with a flap (44) movable between a first position for closing the port and a second position for opening the port (42) and evacuating the gas and/or the smoke, the flap (44) of the or of each port (42) being configured to move from its first to its second position by the pressure generated when the mixture of gas and powder is released, and said at least one port (42) comprising an outlet (46b) facing at least one side of the vehicle (10).

2. The motor vehicle (10) according to claim 1, wherein the housing (2) comprises at least two ports (42) each equipped with a movable flap (44).

3. The motor vehicle (10) as claimed in claim 2, wherein the housing (22) is generally parallelepipedic in shape and comprises two walls, front (30) and rear (32) respectively, and two lateral walls (34), the ports (42) being located on one of the front and rear walls (30, 32).

4. The motor vehicle (10) according to claim 3, wherein the ports (42) are spaced apart and located close to the lateral walls (34).

5. The motor vehicle (10) according to claim 3 or 4, wherein the device (38) is in the form of a pipe comprising two lateral branches (38a) which extend into the cavity (24) along said lateral walls (34), and at least one median or transverse branch (38b) which extends into the cavity (24), for example along one of the front and rear walls (30, 32) which is opposite said ports (42).

6. The motor vehicle (10) according to any of claims 2 to 5, wherein the ports (42) each comprise or form an elbow (46), the elbows (46) of the ports (42) comprising inlets (46a) connected to the cavity (24) and outlets (46b), the outlets (46b) of the two ports (42) facing in opposite directions on two opposite sides of the vehicle.

7. The motor vehicle (10) as claimed in claim 6, wherein the elbow (46) is L-shaped or right-angled.

8. The motor vehicle (10) according to one of the preceding claims, wherein the extinguishing fluid comprises a mixture of gas and powder.

9. The motor vehicle (10) according to one of the preceding claims, wherein it comprises at least one pressure sensor (41a) configured to measure the pressure of said fluid in the device (36).

10. The motor vehicle (10) according to the preceding claim, wherein said at least one sensor (41a) is connected to remote communication means (41b), for example for communicating with elements of the vehicle.

11. The motor vehicle (10) according to any of the preceding claims, wherein the flap (44) of the or each port (42) is configured to move from its first to its second position when the internal cavity (24) reaches a pressure greater than or equal to 1.1 bar.

12. The motor vehicle (10) according to one of the preceding claims, wherein said mixture comprises between 30 and 80% by volume of powder and the remainder fluid.

13. The motor vehicle (10) according to any of the preceding claims, wherein the powder comprises ammonium sulphate and salt and/or sodium and potassium chloride.

14. The motor vehicle (10) according to one of the preceding claims, wherein the battery pack (20) is installed horizontally on the chassis (12) or is integrated into the chassis (12) of the vehicle.

15. The motor vehicle (10) according to any of the preceding claims, wherein the battery pack (20) extends between the wheels (14) and from one side of the vehicle to the other.
